Europäisches Patentamt

European Patent Office

Office européen des brevets

(19)

(11) Veröffentlichungsnummer : **0 359 997 B1**

(12) **EUROPÄISCHE PATENTSCHRIFT**

(45) Veröffentlichungstag der Patentschrift :
29.07.92 Patentblatt 92/31

(51) Int. Cl.$^5$ : **C04B 2/10**

(21) Anmeldenummer : **89115149.0**

(22) Anmeldetag : **17.08.89**

(54) **Verfahren zur Herstellung von Sinterdolomit in einem Drehrohrofen.**

(30) Priorität : **26.08.88 DE 3828997**

(43) Veröffentlichungstag der Anmeldung :
**28.03.90 Patentblatt 90/13**

(45) Bekanntmachung des Hinweises auf die
Patenterteilung :
**29.07.92 Patentblatt 92/31**

(84) Benannte Vertragsstaaten :
**AT BE DE ES FR GB IT**

(56) Entgegenhaltungen :
**DE-A- 2 203 413**
**DE-A- 2 819 038**
**DE-B- 1 078 926**
**US-A- 4 626 198**

(73) Patentinhaber : **DOLOMITWERKE GMBH**
**Postfach 1380**
**W-5603 Wülfrath (DE)**

(72) Erfinder : **Hammer, Thomas, Dr.-Ing. Dipl.-Ing.**
**Berliner Allee 44**
**W-5860 Iserlohn-Letmathe (DE)**
Erfinder : **Poggenpohl, Heinzjosef,**
**Berg-Ing.grad**
**Dümpelstrasse 15**
**W-5800 Hagen-Halden (DE)**
Erfinder : **Prange, Rainer, Dr.-Ing. Dipl.-Chem.**
**In der Asmecke 17**
**W-5800 Hagen 8 Dahl (DE)**
Erfinder : **Richrath, Herbert**
**Eduard-Müller-Strasse 18**
**W-5800 Hagen (DE)**
Erfinder : **Roeder, Alfred, Dr.rer.nat.**
**Dipl.-Phys.**
**Falkstrasse 112**
**W-4100 Duisburg (DE)**

EP 0 359 997 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein Verfahren zur Herstellung von Sinterdolomit, wobei das überwiegend karbonatische Rohmaterial gemahlen, zu Briketts verpreßt und anschließend gesintert wird.

Sinterdolomit dient als feuerfestes Grundmaterial für die Herstellung basischer feuerfester Steine. Für hochwertige feuerfeste Steine wird an den einzusetzenden Sinter als wesentliche Anforderung geringe Verunreinigung an Fremdoxiden (< 3,5 %) und hohe Dichte (Rohdichte > 3,15 g/cm³) gestellt. Das aus der AT-PS 66 278 bekannte Verfahren zum Brennen von vorentsäuertem Magnesit in einem Drehofen liefert einen hinsichtlich des Brenngrades noch sehr ungleichmäßigen Sinter und läßt sich auf das Sintern von Dolomit mit den genannten Anforderungen nicht anwenden.

Man kann aber ausgehend von einem Rohdolomitsplitt mit Korngrößen zwischen ca. 6 und ca. 30 mm bei entsprechend hohen Temperaturen von > 2000 °C eine Rohdichte des Sinterdolomits von ca. 3,20 g/cm³ bei Verunreinigung an Fremdoxiden < 3,5 % erzielen. Schwer sinterbares Rohmaterial wird, wie in DE-PS 31 18 481 beschrieben, in einem ersten Brand nur entsäuert, nach dem ersten Ofendurchgang aufbereitet und kompaktiert und danach in einem zweiten Ofendurchgang gesintert. Der Energieaufwand ist wegen der erforderlichen hohen Temperaturen bzw. wegen des zweistufigen Brennens verhältnismäßig groß.

Bei der Aufbereitung des Rohdolomitsplitts fallen nicht unerhebliche Mengen an Rohdolomitsand mit Korngrößen < 6 mm an. Eine Kompaktierung dieser zwangsweise anfallenden Körnung ist auf direktem Wege nicht möglich. Eine weitere Absenkung der Unterkorngrenze für den Splitt verbietet sich wegen des sonst stark ansteigenden Strömungswiderstandes der Schüttung auf dem dem Drehrohrofen üblicherweise vorgeschalteten Lepolrost, wie z. B. aus DE-AS 16 46 918 bekannt.

Außerdem fällt aus der Entstaubung der Drehrohrofenanlage feinteiliger, überwiegend oxidischer Filterstaub an mit einer oberen Begrenzung des Kornspektrums bei 0,5 mm. Der oxidische Filterstaub läßt sich zwar brikettieren und sintern, aber die erzielbaren Rohdichten der Sinterdolomit-Briketts sind mit < 3,10 g/cm³ zu niedrig.

Diese Rückstände aus der bisher üblichen Herstellung von Sinterdolomit aus Rohdolomitsplitt in einer Drehrohrofenanlage müssen daher anderweitig verwendet, zum Teil auch deponiert werden.

Aus DE-OS 32 09 836 ist bekannt, gemahlenen Rohdolomit mit Zusätzen zu versehen, zu brikettieren und in einem Schachtofen zu entsäuern und zu sintern. Damit wird es zwar möglich, Sinterhilfsmittel gezielt zuzusetzen und hochwertigen Sinterdolomit in einem einzigen Durchgang durch den Schachtofen zu erhalten. Das Verfahren ist jedoch auf den Schachtofen beschränkt, weil die Briketts in dem Temperaturbereich, in dem die Entsäuerung abläuft, eine hohe Porosität, die bis zu 60 % betragen kann, und dadurch bedingt nur eine geringe Festigkeit haben. In einem Drehrohrofen mit seiner im Vergleich zum Schachtofen höheren mechanischen (abrasiven) Beanspruchung konnten bisher Briketts aus überwiegend karbonatischem Rohmaterial darum nicht gebrannt werden, weil sie zerstört werden.

Selbst wenn man, wie in DE-OS 25 53 001 für durch Flotation aufbereitetes, fein gemahlenes Rohmaterial vorgeschlagen, den Preßdruck zur Formung von Schülpen erhöht, gelingt es bei Dolomit nicht, Sinterrohdichten > 3,2 g/cm³ zu erhalten. Auch das Verfahren zur Herstellung von Brikettsinter nach DE-PS 31 18 481 kommt nicht ohne Zusätze zum Rohdolomit aus.

Es besteht daher die Aufgabe, die Festigkeit der Briketts vor Aufgabe auf den Drehrohrofen so weit zu erhöhen, daß das eingangs beschriebene Verfahren in einer Drehrohrofenanlage bei einer Temperatur im Drehrohrofen bis zu 2000 °C durchgeführt werden kann und ein Brikett-Sinterdolomit mit Rohdichten > 3,20 g/cm³ bei Verunreinigungen an Fremdoxiden im Sinterdolomit von < 3,5 % erhalten wird.

Die Lösung der Aufgabe erfolgt mit den kennzeichnenden Merkmalen des Anspruches 1.

Es ist vorteilhaft, wenn das Rohmaterial so fein aufgemahlen wird, daß der Anteil an Körnern mit einer Korngröße < 0,09 mm mehr als 70 % beträgt. Damit wird eine Homogenisierung des Rohmaterials und eine hohe Rohdichte der Sinterbriketts erreicht.

Es ist weiterhin vorteilhaft, wenn die Briketts vor Aufgabe auf den Drehrohrofen auf eine Temperatur von mindestens 1000 °C aufgeheizt werden, also mindestens 100 °C oberhalb der für die vollständige Entsäuerung des Kalziumkarbonats notwendigen Temperatur. Damit wird auch bei Verwendung überwiegend karbonatischen Rohmaterials eine ausreichende Festigkeit der Briketts erreicht, so daß diese im Drehrohrofen praktisch nicht zerstört werden.

Als Rohmaterial kann Rohdolomit oder eine Mischung von Rohdolomit mit Rohmagnesit und/oder Kalkstein eingesetzt werden. Damit wird eine Veränderung des MgO-CaO-Verhältnisses je nach beabsichtigtem Anwendungszweck möglich. Dem Rohmaterial können auch als Bindemittel Zusätze von Oxiden und/oder Hydroxiden des Kalziums und/oder Magnesiums zugegeben werden. Als Zusatz kann auch oxidischer Filterstaub eingesetzt werden.

Besonders vorteilhaft ist es, alle Bestandteile des Rohmaterials gemeinsam zu vermahlen. Es wurde nämlich gefunden, daß beim gemeinsamen Vermahlen eine höhere Sinterrohdichte erzielt werden kann, als bei getrenntem Aufmahlen und anschließendem Vermischen der Bestandteile.

Eine vorteilhafte Ausgestaltung der Erfindung kann darin bestehen, daß Rohdolomitsand mit Korngrößen < 6 mm mit oxidischem Filterstaub gemischt und gemeinsam fein vermahlen wird. Dadurch wird es möglich, die Rückstände aus der bisher üblichen Herstellung von Sinterdolomit aus Rohdolomitsplitt in einer Drehrohrofenanlage zur Herstellung eines hochwertigen Brikett-Sinterdolomits einzusetzen.

Durch das erfindungsgemäße Verfahren wird es außerdem möglich, als Augangsstoffe ausschließlich fein gemahlene Rohmaterialien in einer Drehrohrofenanlage einzusetzen.

Der wirtschaftliche Vorteil bei der Herstellung von Brikett-Sinterdolomit in einer Drehrohrofenanlage besteht ganz allgemein darin, daß Drehrohrofenanlagen je Ofeneinheit einen erheblich höheren Durchsatz im Vergleich zum Schachtofen erlauben, bei dem der Durchsatz begrenzt ist. Der Vorteil des geringeren spezifischen Energieverbrauchs des Schachtofens wird dabei überkompensiert.

Das Verfahren wird an dem nachfolgenden Beispiel der gemeinsamen Verarbeitung von Splitt und feingemahlenen, zu Briketts verpreßten Rohmaterialien beschrieben, ohne darauf beschränkt zu sein.

Die Drehrohrofenanlage besteht aus einem ca. 110 m langen, leicht geneigten Drehrohrofen mit einem Durchmesser von ca. 4,4 m, dem ein Lepolrost zur Entsäuerung des Rohsteins vorgeschaltet ist. Dem Drehrohrofen nachgeschaltet ist ein Schubrostkühler. Verfeuert wird ein Gemisch aus Braunkohlen- und Steinkohlenstaub. Im Drehrohrofen werden die für die Sinterung erforderlichen Temperaturen von 1800 bis 2000 °C erreicht. Die den Drehrohrofen verlassenden heißen Verbrennungsgase werden von den Abgasgebläsen, die den Elektrofiltern nachgeschaltet sind, von unten durch die Schüttung auf dem Lepolrost gezogen. Im Auslauf des Rostes - kurz vor der Aufgabe auf den Drehrohrofen - wird, bedingt auch durch die Verwendung von Zusatzfeuerungen, eine Bett-Temperatur in der Schüttung bis 1300 °C erreicht, so daß die Entsäuerung des Rohmaterials praktisch abgeschlossen ist. Zur Aufgabe auf den Lepolrost gelangt eine Körnung von 6 bis 32 mm. Gemessen bei einem üblichen Betriebspunkt beträgt der Durchsatz an Splitt 60 t/h, was einer Sinterleistung von ca. 30 t/h entspricht.

Das Rohmaterial weist folgende charakteristische Zusammensetzung auf (Massenanteile in Prozent des glühverlustfreien Materials):

CaO      61,0 %
MgO      37,5 %
$SiO_2$      0,5 %
$Fe_2O_3$      0,6 %
$Al_2O_3$      0,3 %
$Mn_3O_4$      0,1 %

Der Glühverlust ist bei Rohdolomitsand und oxidischem Filterstaub sehr unterschiedlich. Er beträgt beim karbonatischen Rohdolomitsand wegen des hohen $CO_2$-Gehaltes ca. 47 % und beim oxidischen Filterstaub wegen des Restgehaltes an $CO_2$ und $H_2O$ ca. 10 %.

Nach dem erfindungsgemäßen Verfahren werden in der ersten Verfahrensstufe der Rohdolomitsand und der oxidische Filterstaub gemeinsam in einer Walzenschüsselmühle vermahlen. Das Mengenverhältnis beträgt dabei 10 bis 40 Teile oxidischer Filterstaub auf 90 bis 60 Teile Rohdolomitsand, vorzugsweise 30 Teile oxidischer Filterstaub auf 70 Teile Rohdolomitsand. Nach der gemeinsamen Aufmahlung beträgt in der Rohmehlmischung der Anteil an Körnern mit einer Korngröße < 0,09 mm mindestens 75 %.

Die Rohmehlmischung wird in der zweiten Verfahrensstufe in einer Brikettpresse brikettiert mit einem Kreislauf für das unter 10 mm abgesiebte Rückgut. Die Nettoleistung einer Presse liegt bei ca. 10 t Grünbriketts je Stunde. Die Briketts haben Kissenform mit einem Volumen von ca. 10 cm³.

Die dritte Verfahrensstufe umfaßt das Entsäuern und Sintern. Dabei werden die Grünbriketts über entsprechende Förderwege dem Lepolrost der Drehrohrofenanlage gleichmäßig aufgegeben. In der Schüttung des Lepolrostes werden die Briketts auf über 1200 °C erhitzt. Sie sind dann entsäuert und die Festigkeit ist soweit angestiegen, daß im nachgeschalteten Drehrohrofen die Briketts nicht zerstört werden. Der Sinterbrand im Drehrohrofen erfolgt bis zu Temperaturen von ca. 2000 °C.

Der nach dem beschriebenen Beispiel hergestellte Brikett-Sinterdolomit - gemeinsam ausgetragen mit dem Sinterdolomit aus Rohdolomitsplitt - hat eine Rohdichte von 3,28 g/cm³ bei Verunreinigungen an Fremdoxiden von 2,5 % (Massenanteile) und einer Porosität von 4,2 % (Volumenanteile).

**Patentansprüche**

1. Verfahren zur Herstellung von Sinterdolomit, wobei das überwiegend karbonatische Rohmaterial gemahlen, zu Briketts verpreßt und anschließend gesintert wird, dadurch gekennzeichnet, daß

a) das Rohmaterial sehr fein aufgemahlen wird,

b) daraus Briketts hergestellt werden, die

c) einem Entsäuerungsaggregat aufgegeben und dort abriebschonend auf Calciniertemperatur aufgeheizt werden, bevor sie

d) dem Drehrohrofen aufgegeben werden.

2. Verfahren nach Anspruch 1, dadurch gekennzeichnet, daß das Rohmaterial so fein aufgemahlen wird, daß der Anteil an Körnern mit einer Korngröße < 0,09 mm mehr als 70 % beträgt.

3. Verfahren nach Anspruch 1 oder 2, dadurch gekennzeichnet, daß die Briketts vor Aufgabe auf den Drehrohrofen auf eine Temperatur von mindestens 1000 °C aufgeheizt werden.

4. Verfahren nach einem der Ansprüche 1 bis 3, dadurch gekennzeichnet, daß als Rohmaterial Rohdolomit oder eine Mischung von Rohdolomit mit Rohmagnesit und/oder Kalkstein eingesetzt wird.

5. Verfahren nach einem der Ansprüche 1 bis 4, dadurch gekennzeichnet, daß dem Rohmaterial Zusätze von Oxiden und/oder Hydroxiden des Kalziums und/oder Magnesiums zugegeben werden.

6. Verfahren nach Anspruch 5, dadurch gekennzeichnet, daß als Zusatz oxidischer Filterstaub eingesetzt wird.

7. Verfahren nach einem der Ansprüche 1 bis 6, dadurch gekennzeichnet, daß alle Bestandteile des Rohmaterials gemeinsam vermahlen werden.

8. Verfahren nach einem der Ansprüche 1 bis 7, dadurch gekennzeichnet, daß Rohdolomitsand mit Korngrößen < 6 mm mit oxidischem Filterstaub gemischt und gemeinsam fein vermahlen wird.

## Claims

1. Process for manufacturing sintered dolomite, wherein the predominantly carbonate raw material is ground, compressed into briquettes, and then sintered, characterised in that

a) the raw material is ground very finely,

b) briquettes are formed therefrom, which

c) are fed to a deacidifying device and are there heated to calcining temperature while being protected from abrasion before they

d) are fed to the rotary cylindrical furnace.

2. Process according to claim 1, characterised in that the raw material is ground so finely that the proportion of grains with a grain size of < 0.09 mm is more than 70%.

3. Process according to claim 1 or 2, characterised in that the briquettes are heated to a temperature of at least 1000°C before being fed to the rotary cylindrical furnace.

4. Process according to one of claims 1 to 3, characterised in that raw dolomite or a mixture of raw dolomite with raw magnesite and/or limestone are used as a raw material.

5. Process according to one of claims 1 to 4, characterised in that additives of oxides and/or hydroxides of calcium and/or magnesium are added to the raw material.

6. Process according to claim 5, characterised in that oxidic filter dust is used as an additive.

7. Process according to one of claims 1 to 6, characterised in that all components of the raw material are ground together.

8. Process according to one of claims 1 to 7, characterised in that raw dolomite sand with grain sizes of < 6 mm is mixed with oxidic filter dust and they are finely ground together.

## Revendications

1. Procédé de fabrication de dolomie frittée, dans lequel la matière première principalement à base de carbonate est moulue, comprimée en briquettes et ensuite frittée, procédé caractérisé en ce que:

a) la matière première est moulue très fine,

b) elle est préparée en briquettes, qui

c) sont envoyées à une unité de désacidification et là sont chauffées à température de calcination en les protégeant de l'usure, avant de

d) les envoyer au four rotatif.

2. Procédé selon la revendication 1, caractérisée en ce que la matière première est moulue à une finesse telle que la proportion de grains de grandeur < 0,09 mm se monte à plus de 70%.

3. Procédé selon la revendication 1 ou 2, caractérisé en ce que les briquettes sont chauffées à une température d'au moins 1000°C avant leur introduction dans le four rotatif.

4. Procédé selon une des revendications 1 à 3, caractérisé en ce qu'on utilise comme matière première de la dolomie brute ou un mélange de dolomie brute avec de la magnésie brute et/ou de la pierre calcaire.

5. Procédé selon une des revendications 1 à 4, caractérisé en ce qu'on adjoint à la matière première des additions d'oxydes et/ou d'hydroxydes de calcium et/ou de magnésium.

6. Procédé selon la revendication 5, caractérisé en ce que comme additif on utilise de la poussière de filtrage contenant des oxydes.

7. Procédé selon une des revendications 1 à 6, caractérisé en ce que tous les constituants de la matière première sont moulus ensemble.

8. Procédé selon une des revendications 1 à 7, caractérisé en ce que le sable dolomitique brut ayant une taille de grains < 6mm est mélangé à de la poussière de filtrage contenant des oxydes et moulu finement avec cette dernière.